# EUROPEAN PATENT SPECIFICATION

(11) **EP 2 015 858 B1**
(45) Date of publication and mention of the grant of the patent: **14.09.2011**
(21) Application number: 07867055.1
(22) Date of filing: 04.04.2007
(51) Int. Cl.: B01D 39/00, D04H 13/02, C08J 5/18

(54) **NONWOVEN WEB OF POLYMER-COATED NANOFIBERS**
VLIESNETZ VON POLYMERBESCHICHTETEN NANOFASERN
VOILE NON-TISSÉ DE NANOFIBRES ENROBÉES DE POLYMÈRE

(30) Priority: 06.04.2006 US 790425 P
(43) Date of publication of application: 21.01.2009
(73) Proprietor: E.I. DU PONT DE NEMOURS AND COMPANY, Wilmington, DE 19898 (US)
(72) Inventor: BLETSOS, Ioannis, V., Midlothian, VA 23113 (US)
(74) Representative: Heinemann, Monica
(86) International application number: PCT/US2007/008489
(87) International publication number: WO 2008/054492

(56) References cited:
- WO-A-03/064006
- WO-A-03/080905
- WO-A-2005/004767

## Description

### BACKGROUND OF THE INVENTION

The present invention relates to a nonwoven web of polymeric fibers comprising a first polymer, the web coated with a second polymer by a vapor deposition process. The nonwoven web can contain connecting nanofibers of the second polymer connecting the coated fibers.

Nanofiber webs have been actively investigated in recent years. It has been found that as the average fiber diameter of the nanofibers has decreased, mean pore size of nanofiber webs has also been reduced. The combination of fiber size and pore size of these webs has been found to result in higher liquid barrier without appreciable detriment to air permeability, as compared with previously known nonwoven webs in which the majority of the fibers have a fiber diameter of greater than 1 µm. Because of such characteristics including fine pore size, low thickness, combination of low air permeability and high liquid barrier as well as other properties, nanofiber webs have been considered for use in various applications including, for example, gas and liquid filtration media, protective clothing, battery separators and capacitor separators.

Depending on the application, certain characteristics of the nanofiber webs are desirable, including hydrophilicity, hydrophobicity, and liquid repellency. It would be desirable to have a means for imparting such characteristics to a previously formed nanofiber web. It would also be desirable to have a means for reducing the pore size of nanofiber webs further without spinning fibers of even smaller diameter.

### BRIEF SUMMARY OF THE INVENTION

A first embodiment of the present invention is a nonwoven web having a top surface and a bottom surface, the web containing polymeric nanofibers of a first polymer having an average fiber diameter between about 50 nm and about 800 nm and pores between said nanofibers, wherein on at least the top surface of said web said polymeric nanofibers are coated with at least a second polymer different from said first polymer, and wherein the thickness of the second polymer coating on the nanofibers of the top surface is greater than the thickness of the second polymer coating on the nanofibers of the bottom surface.

A second embodiment of the present invention is a nonwoven web having a top surface and a bottom surface, the web containing polymeric fibers of a first polymer and pores between said fibers, said fibers coated with at least a second polymer different from said first polymer, and wherein the second polymer coating thickness is a gradient throughout the thickness of the web.

### BRIEF DESCRIPTION OF THE DRAWINGS

Figure 1A is a Scanning Electron Micrograph (SEM) of an uncoated nonwoven web comprising polymeric nanofibers.
Figure 1B is an SEM of a coated nonwoven web according to the invention.
Figure 2 is a schematic diagram of an apparatus suitable for forming the nonwoven web of the invention.

### DETAILED DESCRIPTION OF THE INVENTION

The term "web" refers to a fibrous material capable of being wound into a roll.

The term "nonwoven web" refers to a web of individual fibers positioned in a random manner to form a planar material without an identifiable pattern, as opposed to a knitted or woven fabric.

The term "nanofiber" refers to a fiber having a diameter less than 1 µm.

In one embodiment, the present invention is directed to a porous nonwoven web of fibers, preferably continuous nanofibers, comprising a polymer (herein referred to as the "first polymer") coated with a polymer different from the first polymer (herein referred to as the "second polymer"). The coated web of the invention can further contain connecting nanofibers of the second polymer between and connecting the coated fibers.

According to a preferred embodiment of the present invention, a nonwoven nanofiber web can be coated on the surface of the web only, on the surface of the web and through a portion of the thickness of the web adjacent the coated surface, or throughout the entire thickness of the web. When it is stated herein that the nanofibers on the surface only are coated, it is meant that only the nanofibers within about 2 µm of the surface (for convenience, referred to as the "top surface") of the nonwoven web to which the coating is applied are coated with the second polymer coating.

According to another embodiment of the invention, when the nanofibers of the top surface of the nonwoven web and a portion of the thickness of the web adjacent the top surface are coated with the second polymer coating, there can also be a gradient of the coating thickness of the second polymer through the thickness of the web within the coated portion of the web, such that the coating thickness decreases with the distance from the surface. Likewise, the second polymer coating can be entirely absent from the nanofibers on the bottom surface.

Connecting nanofibers, which can bridge over the pores between the underlying coated fibers, and consisting essentially of a second polymer can be present between the coated web fibers, regardless of the depth of the second polymer coating. A nonwoven web of first polymer fibers, such as spunbond fibers, meltblown fibers, flash spun fibers, staple fibers, electrospun nanofibers or electroblown nanofibers, or combinations thereof, is coated with the second polymer by a vapor deposition process which, in addition to forming the coating on the surface of the web fibers, can form connecting or bridging nanofibers of the second polymer between and connecting the first polymer fibers. Surprisingly, it has been found that the connecting nanofibers do not exist in the uncoated starting web, but rather can be created during the vapor deposition process.

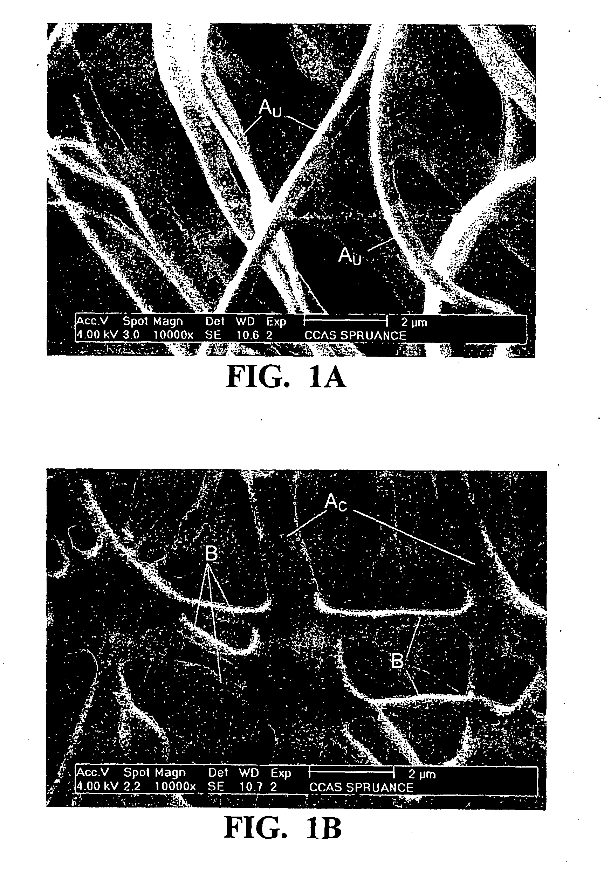

To illustrate this, Figure 1A is a Scanning Electron Microscopy (SEM) image of an uncoated nanofiber web (Example 2 below, untreated side) and Figure 1B is an SEM of the same nanofiber web after being coated with the second polymer coating (Example 2 below, treated side). In Figure 1A, the starting nanofibers present in the uncoated web are indicated by reference letter A_{U}. In Figure 1B, the coated nanofibers are indicated by reference letter A_{C}, and the connecting nanofibers are indicated by reference letter B. As can be seen, the connecting nanofibers B are formed between the coated nanofibers A_{C}, with each end of connecting nanofibers B terminating at a coated nanofiber. That is, the connecting nanofibers bridge across the open pores of the underlying first polymer nanofiber web (Fig. 1 B), so as to reduce the average pore size of the coated web, as compared to the uncoated web (Fig. 1A).

According to the present invention, the bottom surface of the web, in addition to the top surface, can be coated with the second polymer, either by permitting the coating formulation to completely penetrate the web to the bottom surface, or by separately coating the bottom surface in the same manner as the top surface. Alternatively, the bottom surface of the web can be coated with a third polymer which is different from both the first polymer of the nanofibers and the second polymer of the coating applied to the top surface. The nanofibers on the bottom surface, or on the bottom surface and a portion of the thickness adjacent the bottom surface, can be coated with the second and/or third polymer coating.

The coating applied to the bottom surface or the bottom surface and a portion of the thickness of the web adjacent the bottom surface can overlap the coating applied to the top surface of the web. The second polymer can be applied to both the top and bottom surfaces such that a coating thickness gradient is created through the thickness of the web from both directions, or the application of the coating from both surfaces can be employed to create a coated web having approximately uniform coating thickness applied throughout the web.

In carrying out the invention, a third polymer coating can be applied over the second polymer coating. For instance, the second polymer can be applied to the top surface and a portion of the thickness of the web adjacent the top surface; and subsequently a third polymer can be applied to the bottom surface and a portion of the thickness of the web adjacent the bottom surface such that the portions coated by the second and third polymers overlap. The third polymer will adhere to the second polymer if the second polymer has a sufficiently high surface energy relative to the surface tension of the third polymer so that the third polymer coating wets the surface of the second polymer coating. When the fibers of the web are coated with a third polymer, connecting nanofibers consisting essentially of the third polymer can be formed between the fibers coated with the third polymer, as previously described with respect to the connecting fibers of the second polymer.

Additionally, if desired, the third polymer can be coated over the second polymer coating, and additional polymer coatings can be added. When a third (or more) coating is added over a second polymer coating containing the bridging nanofibers, then the bridging second polymer nanofibers are also coated.

An uncoated starting nanofiber web can comprise nanofibers having an average fiber diameter between about 50 nm and about 800 nm. The nanofiber web can be formed by any process capable of making nanofibers in this diameter range, including electrostatic spinning and electroblowing. A process for forming a web of continuous nanofibers via electroblowing is disclosed in World Patent Publication Number WO 03/080905A (corresponding to U.S. Serial No. 10/477,882, filed November 19, 2003), which is incorporated herein by reference. The nonwoven web can consist essentially of such nanofibers, with at least 70%, even at least 80%, even at least 90%, and even at least 95% of the fibers of the web in this diameter range.

Likewise, the coating process disclosed herein can be applied to nonwoven webs or scrims made of fibers larger than nanofibers, or even porous films, with similar results. For example, the nonwoven web or scrim to be coated can be any flexible sheet material including woven fabrics, nonwoven fabrics such as meltblown webs, spunbond webs, flash spun webs, staple-based webs including carded and air-laid webs, wet laid nonwovens, resin-bonded nonwovens, needle-punched nonwovens and spunlaced webs, porous films, knit fabrics, apertured films, paper, and combinations thereof.

The nanofibers of the nonwoven web can be formed of polymers including thermoplastic and thermosetting polymers. Polymers suitable for use in the nanofibers, i.e., for use as the first polymer, include, but are not limited to, polyimide, aliphatic polyamide, aromatic polyamide, polysulfone, cellulose acetate, polyether sulfone, polyurethane, poly(urea urethane), polybenzimidazole, polyetherimide, polyacrylonitrile, poly(ethylene terephthalate), polypropylene, polyaniline, poly(ethylene oxide), poly(ethylene naphthalate), poly(butylene terephthalate), styrene butadiene rubber, polystyrene, poly(vinyl chloride), poly(vinyl alcohol), poly(vinylidene fluoride), poly(vinyl butylene), copolymers or derivative compounds thereof, and combinations thereof.

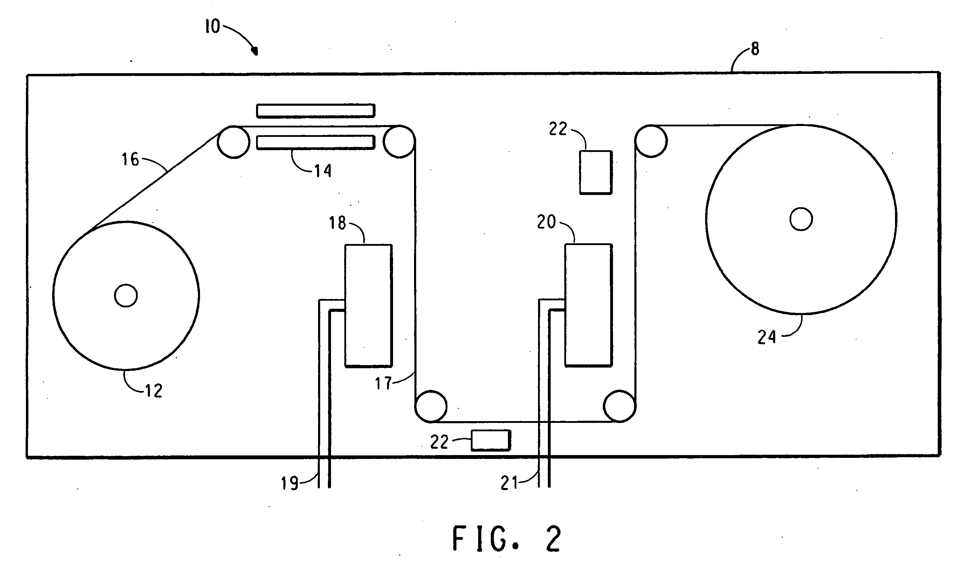

Figure 2 is a schematic diagram of an apparatus 10 suitable for vapor-deposition coating of the nonwoven web with a curable monomer or oligomer (or blend of monomers and/or oligomers) under vacuum, as disclosed in co-pending U.S. Patent Publication No. 2004/0028931-A1, filed June 19, 2003, incorporated herein by reference in its entirety. The process by which the web is coated according to the invention is described as follows. The starting nanofiber web 16 wound on feed roll 12 is located in a vacuum chamber 8. The vacuum chamber is connected to a vacuum pump (not shown), which evacuates the chamber to the desired pressure. Suitable pressures are between 2 x 10⁻⁴ to 2 x 10⁻⁵ Torr (2.66 x 10⁻⁵ to 2.66 x 10⁻⁶ kPa). The uncoated web is fed from feed roll 12. At least one surface of the uncoated web is first optionally exposed to plasma source 14 in order to remove loosely held low molecular weight compounds and functionalize the surface, and consequently modify the surface energy of the surface to improve its wetting by the condensing vapor. The plasma source may be low frequency RF, high frequency RF, DC, or AC. Suitable plasma treatment methods are described in U.S. Pat. No. 6,066,826, WO 99/58757, and WO 99/59185.

Within the chamber, the curable monomer(s), oligomer(s), or blends thereof, are fed in a continuous flow from a reservoir (not shown) through inlet tubing 19 to flash evaporation apparatus 18 where a vapor is produced. The flash evaporation apparatus can be an ultrasonic atomizer, where, with the aid of heaters (not shown), the monomer or oligomer is flash evaporated. The monomer is preferably degassed prior to injecting it as a vapor into the vacuum chamber. The specific aspects of the flash evaporation and monomer deposition process are described in detail in U.S. Patent. Nos. 4,842,893; 4,954,371; and 5,032,461, all of which are incorporated herein by reference.

The flash-vaporized monomer then condenses on one surface 17 of the nanofiber web (referred to herein as the top surface) to produce a coating of the monomer or oligomer on the nanofibers within a depth of about 2 µm from the top surface of the web. Optionally, sufficient time is permitted for the monomer or oligomer to penetrate to a desired depth through the web. The coating is then cured by any known, suitable curing means 22. Suitable curing means include electron beam and ultraviolet radiation sources which cure the monomer or oligomer coating by causing polymerization or cross-linking of the condensed coating. If an electron beam gun is used, the energy of the electrons should be sufficient to polymerize the coating in its entire thickness as described in U.S. Pat. No. 6,083,628, which is incorporated herein by reference. The curing of monomer and oligomer coatings is also described in U.S. Pat. Nos. 4,842,893, 4,954,371, and 5,032,461. Alternatively, an oligomer can solidify simultaneously with cooling. For oligomers that are solid at room temperature, curing may not be required as described in U.S. Pat. No. 6,270,841 that is incorporated herein by reference. The coating can be cured under vapor-density and residence-time conditions that result in a polymer coating having a thickness between about 15 nm and about 2 µm.

In the event that more than one coating is desired, multiple flash evaporation apparatuses can be used in series, or if the additional coatings are desired on the opposite surface of substrate 16, optional additional flash evaporation apparatuses 20 and 21 and curing means 22 can be provided as shown in Figure 2. The coated substrate is finally wound up on wind-up roll 24.

In order to deposit multiple monomer or oligomer coatings, the nonwoven web can be moved back and forth between the feed roll and the wind-up roll. Alternatively, it should be understood that rather than being fed from a feed roll to a wind-up roll along a linear path, the starting nonwoven web can be moved over one or more rotating drums while passing sequentially through the above described process steps (not illustrated).

The thickness of the coating can be controlled by the line speed and/or vapor flux of the flash evaporation apparatus used in the vapor deposition process. As the coating thickness increases, the energy of the electron beam may need to be adjusted in order for the electrons to penetrate through the coating and achieve effective polymerization. For example, an electron beam at 10 kV and 120 mA can effectively polymerize acrylate coatings up to 2 µm thick.

Cooling the web to be coated during vapor deposition enhances the efficiency of the monomer/oligomer condensation, as described in U.S. Pat. No. 4,842,893 and WO 98/18852. This may be accomplished by passing the web over a cooled drum as in U.S. Pat. No. 4,842,893 during vapor deposition. Cryoplates (not shown) may also be employed for this purpose, located such that they cool the web prior to vapor deposition.

The process provides a means of controlling the ultimate pore size of the coated web. The process can be run so that the coating does not close the pores of the web, such as by passing the starting web through the vapor deposition portion of the process at a high line speed resulting in a relatively thin coating. Alternatively, the process can be run so that the coating reduces the average pore size of the nonwoven web significantly, either by forming said connecting nanofibers or due to the coating thickness alone, such as by passing the starting web through the vapor deposition portion of the process at a low line speed or by passing the web through the vacuum chamber to be coated multiple times, resulting in a relatively thick coating, which can be controlled to partially or even fully occlude the pores in the web. In this way, even a nonporous membrane can be produced.

At low line speeds, during the time between condensation of the vapor of the second monomer and curing, the liquid second monomer can wet the surface of the fibers through the thickness of the web. The extent of the wetting thickness can be controlled by the time allowed after the vapor monomer condenses to wet the surface of the fibers before the electron beam is reached at which time polymerization occurs stopping further wetting by the condensed monomers. The rate at which wetting occurs depends also on the surface tensions of the first polymer of the nanofibers and the condensed second monomer. Plasma treatment of the nanofibers before the monomer vapor condenses onto them can also facilitate such wetting by increasing the surface tension of the nanofibers. Good wetting of the first polymer surface by the monomer vapor of the coating results in a good coverage of the nanofiber surface exposed directly to the vapor. In the absence of plasma treatment of the first polymer nanofibers, depending on the surface tension difference between the coating and the nanofibers, limited and localized wetting of the nanofibers may occur, resulting in partially coated nanofibers and poor adhesion of the second polymer on the nanofibers. By appropriately controlling these parameters, the coating thickness on the nanofibers can be grown and close the pore structure in a uniform way, or constrict it by forming localized protruding structures on the nanofibers. It has been observed that under conditions of good wetting of the monomer vapor on the nanofiber surface, if relatively heavy loads of the second monomer are deposited on the nanofibers, the condensing monomers can accumulate and form beads. Under these conditions, when the surfaces of these beads come into close proximity, the bead surfaces may merge and nanofibers of the second polymer form to connect the web fibers, thus bridging the pores between them.

The coating monomer(s) or oligomer(s) can be selected depending on the desired functionality of the polymer coating, which is the product of the polymerization of the monomer or oligomer. The polymer coating can impart any of a variety of functionalities useful for a variety of applications. For instance, the coating polymer composition can be selected to result in a liquid repellent surface on which water, oil, and alcohol will not wet, a hydrophobic surface on which water will not wet, or a hydrophilic surface on which water will quickly wet or absorb even faster than with the first polymer.

Suitable monomers for use in the invention include ethylenically unsaturated monomers, such as those disclosed in U.S. Patent Number 6,933,005, incorporated herein by reference. The number of unsaturated sites in the ethylenically unsaturated monomer is at least one, but can be greater than one.

Suitable ethylenically unsaturated monomers are alkyl acrylates, alkyl methacrylates, and any mixtures thereof, where the alkyl groups have 1-15 carbon atoms, and even 2-8 carbon atoms. Suitable alkyl methacrylate monomers are methyl methacrylate, ethyl methacrylate, propyl methacrylate, butyl methacrylate, isobutyl methacrylate, pentyl methacrylate, hexyl methacrylate, octyl methacrylate, nonyl methacrylate, lauryl methacrylate, and the like. Similarly, suitable alkyl acrylate monomers include methyl acrylate, ethyl acrylate, propyl acrylate, butyl acrylate, isobutyl acrylate, pentyl acrylate, hexyl acrylate, octyl acrylate, nonyl acrylate, lauryl acrylate, and the like. Cycloaliphatic methacrylates and acrylates also can be used, for example, such as trimethylcyclohexyl methacrylate, trimethylcyclohexyl acrylate, isobornyl methacrylate, isobornyl acrylate, t-butyl cyclohexyl acrylate, or t-butyl cyclohexyl methacrylate. Aryl acrylate and aryl methacrylates also can be used, for example, such as benzyl acrylate and benzyl methacrylate. Of course; mixtures of two or more of the above mentioned monomers are also suitable.

In addition to alkyl acrylates or methacrylates, other ethylenically unsaturated monomers can be used in the present invention. Exemplary of such other monomers are styrene, methyl styrene, acrylamide, acrylonitrile, methacrylonitrile, and the like. Hydroxy functional monomers can also be used. Suitable hydroxy functional monomers are hydroxy alkyl (meth)acrylates meaning hydroxy alkyl acrylates and hydroxy alkyl methacrylates having 1-4 carbon atoms in the alkyl groups such as hydroxy methyl acrylate, hydroxy methyl methacrylate, hydroxy ethyl acrylate, hydroxy ethyl meth acrylate, hydroxy propyl methacrylate, hydroxy propyl acrylate, hydroxy butyl acrylate, hydroxy butyl methacrylate, and the like.

Polymerization of the above-listed monomers and mixtures thereof result in generally hydrophobic polymer coatings, with levels of hydrophilicity corresponding to the relative availability of free hydrogen bonding sites in the polymer backbone. Hydrophilicity of the as-polymerized coatings can be enhanced by modification of the monomers with highly hydrophilic pendant groups, such as those formed by carboxylic acid, sulfonic acid, or alkyl oxide modifiers, or by addition of alkyl oxide oligomers to the coating formulation.

"Liquid Repellent" polymer coatings, i.e. those which are highly hydrophobic, oleophobic and alcohol repellent, can be obtained by depositing and polymerizing highly fluorinated monomers, such as fluoroalkyl containing monomers. Typical useful fluoroalkyl containing monomers are perfluoro methyl ethyl methacrylate, perfluoro ethyl ethyl methacrylate, perfluoro butyl ethyl methacrylate, perfluoro pentyl ethyl methacrylate, perfluoro hexyl ethyl methacrylate, perfluoro octyl ethyl methacrylate, perfluoro decyl ethyl methacrylate, perfluoro lauryl ethyl methacrylate, perfluoro stearyl ethyl methacrylate, perfluoro methyl ethyl acrylate, perfluoro ethyl ethyl acrylate, perfluoro butyl ethyl acrylate, perfluoro pentyl ethyl acrylate, perfluoro hexyl ethyl acrylate, perfluoro octyl ethyl acrylate, perfluoro decyl ethyl acrylate, perfluoro lauryl ethyl acrylate, perfluoro stearyl ethyl acrylate, and the like. Perfluoro alkyl ethyl methacrylates can be used wherein the fluoroalkyl group contains 4-20 carbon atoms.

Other suitable acrylate monomer compositions for use in the invention are also described in U.S. Patent No. 6,083,628 and WO 98/18852, incorporated herein by reference.

In nanofiber webs made of hydrophilic polymers, like nylon 6,6, poly(vinyl alcohol), polyacrylonitrile, etc., water soaks through the nanofiber web and the water contact angle is zero. It has been found that when the surface of a nanofiber web, wherein the first polymer fibers contain no fluoropolymer or other such fluorine-containing components, is coated with a polymer formed by the polymerization of Liquid Repellent monomers, the resulting coated web surprisingly has a water contact angle on the coated surface greater than the theoretical maximum contact angle of water for a continuous layer of the coating polymer applied to a continuous, flat surface, like a film with a high degree of flatness. It has been found that when the surface of a nanofiber web is coated with a polymer formed by the polymerization of these monomers, the static contact angle of water on the surface is/can be at least about 135°. This high contact angle is a result of the water drop partly in contact with air in the space between the nanofibers and partly in contact with the nanofibers, which after they have been coated with hydrophobic/Liquid Repellent coatings, are no longer hydrophilic and have a reduced surface tension as defined by the hydrophobic/Liquid Repellent coating formulation.

When the nanofiber web is made of a hydrophilic polymer the hydrohead is zero. Similarly, the repellency of the nanofiber web to alcohol or oil is zero because they both readily wet it. The rate of penetration of liquids through solid pores is proportional to the average pore radius, the surface tension of the liquid and the cosine of its contact angle to the solid, and inversely proportional to the viscosity of the liquid and the size of the pores. It has been found that by reducing the surface tension of the nanofibers by coating them with a hydrophobic polymer, their water contact angle is increased, and thus the hydrohead of the coated web can be increased dramatically. When a Liquid Repellent polymer, such as a fluorinated polymer, is used to coat the surface of a hydrophilic web which has hydrohead and alcohol repellency of zero, the resulting coated nonwoven web can have a hydrohead at least about 3.0 m, even as high as 6.6 m. Similarly, it has been found that the alcohol repellency can be in the range of 1-5, or even as high as 5-10 (i.e., neat isopropyl alcohol).

Conversely, it has also been found that when coated with a hydrophilic polymer composition, the web of the invention can have a wetting time of at least 25% lower than an equivalent uncoated web of relatively hydrophilic polymer nanofibers.

According to the present invention, the coated nonwoven web of the invention can be combined with a supporting scrim. The scrim can be any flexible sheet material (including nonwoven materials, woven fabrics, knit fabrics, films, papers, composite sheets, etc.) capable of providing the coated nonwoven web with improved structural integrity. Examples of materials suitable for use as the supporting scrim include woven fabrics, nonwoven fabrics such as meltblown webs, spunbond webs, flash spun webs, staple-based webs including carded and air-laid webs, wet laid nonwovens, resin-bonded nonwovens, needle-punched nonwovens and spunlaced webs, porous films, knit fabrics, apertured films, paper, and combinations thereof. The multilayer composite can be made by layering one or more coated nonwoven webs (N) with a scrim layer (S) to form an SNₓ structure, or by sandwiching one or more coated nonwoven web(s) between two scrim layers to form a SNₓS structure, wherein x is at least one.

### Test Methods

In the non-limiting examples that follow, the following test methods were employed to determine various reported characteristics and properties. ASTM refers to the American Society of Testing Materials. ISO refers to the International Standards Organization. TAPPI refers to Technical Association of Pulp and Paper Industry.

Basis weight was determined by ASTM D-3776, which is hereby incorporated by reference and reported in g/m².

Fiber Diameter was determined as follows. Eleven scanning electron microscope (SEM) images at 5,000x magnification were taken of each nanofiber layer sample. The diameter of ten (10) clearly distinguishable nanofibers were measured from the photographs and recorded. Defects were not included (i.e., lumps of nanofibers, polymer drops, intersections of nanofibers). The average fiber diameter for each sample was calculated. Similarly the thickness of the vapor deposited polymeric coatings was measured by comparing the diameters of the nanofibers before and after coating at 10000x magnification from 5 SEM images.

Frazier Air Permeability is a measure of air permeability of porous materials and is reported in units of ft³/min/ft². It measures the volume of air flow through a material at a differential pressure of 0.5 inches (12.7 mm) water. An orifice is mounted in a vacuum system to restrict flow of air through sample to a measurable amount. The size of the orifice depends on the porosity of the material. Frazier permeability is measured in units of ft³/min/ft² using a Sherman W. Frazier Co. dual manometer with calibrated orifice, and converted to units of m³/min/m².

Alcohol/water repellency was measured as follows. Fifteen droplets from each of 10 different solutions of alcohol in water, numbered from 1 to 10 according to percent isopropanol (wherein the number represents the percent isopropanol divided by 10), are placed one inch apart along the width of the sheet to be measured. The width of the sheet that is tested corresponds to the width of the roll sample that was vapor deposition coated. After 5 minutes, each droplet is examined for signs of wetting and penetration to the other side of the sheet. The alcohol/water repellency of the sheet is calculated as the number of the alcohol/water solution which caused the sheet to show signs of wetting minus one, which is also the highest number of solution at which there were no signs of wetting and penetration to the other side of the sheet.

Hydrostatic head was measured using ISO 811, which is hereby incorporated by reference and is reported in cm of water. This test measures the resistance of a sheet to the penetration of liquid water under a static load. A 100 cm² sample is mounted in a Shirley Hydrostatic Head Tester (manufactured by Shirley Developments Limited, Stockport, England). Water is pumped against one side of the sample until three points of leakage appear on the opposite surface.

Electron Spectroscopy for Chemical Analysis (ESCA) (also known as XPS or X-Ray Photoelectron Spectroscopy) was used to identify surface functional groups (e.g., C-C bonding as in polyethylene or hydrocarbon oligomers, -C(=O)O as in acrylates, -CF₂, -CF₃, as in fluoroacrylates, etc.) and to provide a semiquantitative surface elemental composition (i.e., atom %, that is the % of the atoms on the surface, i.e., carbon, oxygen, fluorine, etc., excluding hydrogen). The sampling depth of ESCA as used here is approximately 10 nm; consequently, the information that it provides is characteristic of the surface top chemistry.

Static Water Contact Angles were measured using a Rame-Hart: NRL C.A. Goniometer model 100-00-115. A syringe with the test fluid, in this case water, is lowered to the appropriate height above the surface of the test sample and a drop is dispensed that contacts the surface. The field of view is adjusted to be able to read the correct contact angle with a protractor as the tangent of the surface of the sample and the drop.

Water Wicking Rates in the machine direction were measured for three 38 mm x 160 mm specimens per sample. The specimens were lowered to a scribed 25 mm mark in a glass beaker filled to 600 mL level with water. When the leading edge of the water crossed the 38 mm line the timer started counting for 5 minutes, at which time the leading edge of the water was noted and recorded. The wicking rate was then calculated as mm/5 min.

Wetting Times of four droplets of water on three specimens per sample were measured from the time the droplets were placed onto the surface to the time they disappeared by wetting through and across the web.

### Examples

Two hydrophilic and one hydrophobic/Liquid Repellent monomer formulations were used in the Examples that follow. Hydrophilic formulation 1 (Hydrophilic 1) is a mixture of carboxylic acid and sulfonic acid modified acrylates (e.g., β-carboxyethyl acrylate, sulfonic acid acrylate; etc.) and triacrylate monomers (e.g., SR9035, SR351, etc.). Hydrophilic formulation 2 (Hydrophilic 2) is a mixture of triacrylate monomers (e.g., SR9035, SR351, etc.) and polyethylene glycol oligomers (e.g., polyethylene glycol phenyl ethers, etc.). The hydrophobic/ Liquid Repellent formulation (Liquid Repellent) is a mixture of Zonyl® TM and diacrylate monomers (e.g., SR238, SR9003, etc.).

SR351, SR9035, SR238, and SR9003 are commercially available from Sartomer Company (Exton, PA). Zonyl®™ Fluorinated Telomer B Methacrylate is available from E. I. du Pont de Nemours and Company (Wilmington, DE).

### Examples 1-9

Hereinafter the present invention will be described in more detail in the following examples. An electroblowing process and apparatus for forming a nanofiber web of the invention as disclosed in World Patent Publication number WO 2003/080905 was used to produce the nonwoven webs of continuous nanofibers of the Examples below.

A nonwoven web of nanofibers having a basis weight of 39 g/m² and a thickness of 110 µm was made by electroblowing a solution of nylon 6,6 polymer having a density of 1.14 g/cc (available from E. I. du Pont de Nemours and Company, Wilmington, Delaware) at 24 weight percent in formic acid at 99% purity (available from Kemira Oyj, Helsinki, Finland). The range of fiber diameters for the nonwoven web was about 200 to about 800 nm.

For each of the Examples below, samples of the continuous nanofiber web 18 inches (46 cm) wide were attached to a leader sheet and introduced to a vacuum chamber equipped with a feed roll, plasma pre-treatment, a flash evaporation nozzle capable of introducing monomer or oligomer vapor, an electron gun capable of curing the monomer or oligomer, and a wind-up roll, as generally described by Figure 2, without optional additional monomer inlet 21 and flash evaporation apparatus 20. The vacuum chamber was pumped down to less than 5x10⁻⁴ Torr. The samples were initially exposed to Ar/N₂ (80/20) plasma pretreatment at 1 kW and 40 kHz.

The monomer or oligomer or monomer and/or oligomer blend was fed. through the nozzle at a controlled rate to the flash evaporator while moving the nonwoven web through the vacuum chamber at a controlled speed. After a desired period of time, the condensed monomer/oligomer coating was cured using an electron beam. The time between the deposition of the monomer onto the nonwoven web and its curing was controlled, and is referred to as "time-to-curing". For each example, the monomer formulation used, formulation feed rate, web speed, time-to-curing, and theoretical surface coverage are given in Table 1. The theoretical surface coverage is calculated based on the monomer feed rate, the web speed and the web width, assuming the density of the monomer/oligomer is 1 g/cc, monomer condensation and vapor deposition efficiencies of 100% and that the surface of the web to be coated is flat.

In examples 7-9 the samples were treated from both sides to counterbalance the one-sided gradients and form a more uniform coverage through the thickness of the web.

**Table 1**

| **Sample** | **Monomer Formulation** | **Formulation Feed Rate (mL/min)** | **Web Speed (m/min)** | **Time-to-Curing (ms)** | **Theoretical Surface Coverage Per Treatment (g/m²)** |
|---|---|---|---|---|---|
| **Treatment from One Side** | | | | | |
| Example 1 | Hydrophilic 1 | 77 | 152 | 180 | 1.11 |
| Example 2 | Hydrophilic 2 | 20 | 15 | 1200 | 2.87 |
| Example 3 | Hydrophilic 2 | 20 | 30 | 600 | 1.44 |
| Example 4 | Hydrophilic 2 | 20 | 152 | 120 | 0.29 |
| Example 5 | Liquid Repellent | 128 | 152 | 180 | 1.84 |
| Example 6 | Liquid Repellent | 25 | 152 | 120 | 0.36 |

| **Treatment from Both Sides** | | | | | |
|---|---|---|---|---|---|
| Example 7 | Hydrophilic 2 | 25 | 152 | 360 | 0.36 |
| Example 8 | Hydrophilic 2 | 25 | 15 | 1200 | 3.59 |
| Example 9 | Liquid Repellent | 25 | 15 | 1200 | 3.59 |

As monomer was deposited on the web, it was observed that on the side of treatment the thickness of the coating increased on the surface of the fibers followed by accumulation of the coating at fiber cross-over points (i.e., where web fibers meet and overlap). This was followed by coating beads of the second, coating polymer forming on the surface of the web fibers. These coating beads eventually, most likely when their surfaces came close together, merged and split into the coating nanofibers that connect the original nanofibers of the web (Fig. 1B).

When the continuous nanofiber web was not plasma pretreated, formation of the coating bridging fibers starting as low as 0.6 g/m² total surface coverage was observed. The total surface coverage was calculated based on treatment from both sides and a 0.9 efficiency of condensation (this covers non-fluorinated acrylates) and accounts for the amount of coating accumulated on a flat continuous surface (i.e. film, with no vapor penetration through-thickness).

When the web was plasma pretreated to facilitate wetting of the fiber surface by the monomer vapor, in the one sided treatment, formation of the coating fibers starting at 2.6 g/m² total surface coverage, calculated as above. Bridging nanofibers of the second polymer were observed when the coating thickness range was about 60 - 240 nm.

ESCA was used to analyze the surface composition of the Control and Examples. ESCA was performed at 90 degree photoelectron exit angle, which corresponds to a sampling depth of approximately 10 nm. Table 2 includes the fluorine, carbon, oxygen, nitrogen, and sulfur content of the surface of the Control sample and the treated and untreated sides of the Examples as measured using ESCA. The Coating Surface Coverage represents the percentage of the surface that is coated, and is calculated as the ESCA percent change of the nitrogen content (representing the nitrogen atoms of the polyamide nanofiber web) on the treated or untreated side vs. the untreated Control surface, or: (%N Control - %N Treated)/%N Control x 100, or (%N Control - %N Untreated)/%N Control x 100.

**Table 2**

| **Sample** | **ESCA: Atom Percent Excluding Hydrogen (%)** | | | | | **Coating Surface Coverage** |
|---|---|---|---|---|---|---|
| | **F** | **C** | **O** | **N** | **S** | **%** |
| Control | ND | 75 | 13 | 12 | ND | 0 |
| Example 1 (Untreated Side) | ND | 76 | 12 | 12 | ND | 0 |
| Example 1 (Treated Side) | ND | 70 | 27 | 2.4 | 1.2 | 80 |
| Example 2 (Untreated Side) | ND | 79 | 9.8 | 11 | ND | 7 |
| Example 2 (Treated Side) | ND | 78 | 21 | 0.4 | ND | 97 |
| Example 3 Untreated Side) | ND | 79 | 9.5 | 11 | ND | 7 |
| Example 3 (Treated Side) | ND | 78 | 22 | 0.6 | ND | 95 |
| Example 4 (Untreated Side) | ND | 80 | 9.5 | 11 | ND | 7 |
| Example 4 (Treated Side) | ND | 78 | 21 | 1.1 | ND | 91 |
| Example 5 (Untreated Side) | 25 | 59 | 10 | 5.5 | ND | 54 |
| Example 5 (Treated Side) | 53 | 40 | 6.6 | 0.3 | ND | 98 |
| Example 6 (Untreated Side) | 4.0 | 72 | 12 | 11 | ND | 4 |
| Example 6 (Treated Side) | 52 | 40 | 6.4 | 1.1 | ND | 91 |
| Example 7 (Side.A) | ND | 73 | 26 | 1.0 | ND | 91 |
| Example 7 (Side B) | ND | 72 | 28 | 0.5 | ND | 96 |
| Example 8 (Side A) | ND | 74 | 25 | 0.3 | ND | 97 |
| Example 8 (Side B) | ND | 74 | 26 | 0.2 | ND | 99 |
| Example 9 (Side A) | ND | 76 | 12 | 12 | ND | 0 |
| Example 9 (Side B) | ND | 75 | 13 | 12 | ND | 0 |

| | | | | | | |
|---|---|---|---|---|---|---|
| ND = Not Detected | | | | | | |

The composition of the untreated Control surface is equivalent to the composition of the nylon 6,6 polymer of the nanofiber web. In the case of Example 1, the composition of the untreated side was equivalent to the composition of the Control (within normal measurement error), while the composition of the treated side was significantly different from the Control surface since it included the composition of the polymer coating. This indicates that the majority of the coating composition is on the treated side of the web, and that if some coating penetrated beyond the surface of the treated side, only a portion of a thickness was coated, as indicated by the lack of coating on the untreated side. By contrast the coatings of examples 2-6 penetrated through the entire thickness of the web all the way to the untreated side. In this case, regardless of the composition of the coating formulation, there was clearly a gradient of coating coverage between the treated and the untreated side. In examples 2-4 the coating gradients from the treated to the untreated side are approximately the same, indicating that the time to curing is important. By contrast, a larger quantity of the coating in Example 5 penetrated through the entire thickness of the web, such that about 54% of the surface of the nanofibers on the untreated side was covered.

In Example 9, although twice the amount of the Liquid Repellent formulation was used as compared to Example 5, the time to curing was almost 7x longer and as a result it appears that the Liquid Repellent formulation was pumped out by the vacuum before it had a chance to cure. It is believed that Example 9 demonstrates a limit to the time differential between coating and curing for the particular coating formulation used therein.

Table 3 includes measurements for the contact angle of water on the surface of the web, and the hydrohead and the alcohol repellency of the web for the Control sample and Examples 5 and 6, coated with the Liquid Repellent formulation. These data indicate that nanofiber webs coated according to the invention can be highly repellent to water and isopropyl alcohol (IPA), with water contact angles greater than 125°, and even greater than 135°. The hydrohead of Example 5 was surprisingly high, indicating that the invention can be used to transform nonwoven webs having no barrier (hydrohead of zero) to nonwoven webs having very high barrier, as an alternative to nonwoven webs comprising fluorinated polymeric nanofibers.

**Table 3**

| **Sample** | **Contact Angle of Water (degrees)** | **Hydrohead (cm of water)** | **Alcohol Repellency** |
|---|---|---|---|
| Control | 0 | 0 | 0 |
| Example 5 (Untreated Side) | 136 | 249 | 3 |
| Example 5 (Treated Side) | 138 | 314 | 5 |
| Example 6 (Untreated Side) | 127 | 59 | 1 |
| Example 6 (Treated Side) | 129 | 76 | 2 |

Table 4 includes wicking rates and wetting times of water on the surface of the web as measured for the Control samples and Examples 1, 7, and 8, which were coated with Hydrophilic Formulations 1 and 2. These data indicate that the surface of the nanofiber web can be modified according to the invention to increase the wicking rate and correspondingly decrease the wetting time.

**Table 4**

| **Sample** | **Wicking Rate (mm/5 min)** | **Wetting Time (sec)** |
|---|---|---|
| Control | 72 | 26 |
| Example 1 | 78 | 15 |
| Example 7 | 94 | 19 |
| Example 8 | 94 | 4 |

Accordingly, the exemplary data herein demonstrate that new and useful modifications to porous fiber web materials, particularly porous nonwoven nanofiber webs, can be achieved by vapor deposition of monomer coatings onto the webs, followed by polymerization of the deposited monomers.

## Claims

1. A nonwoven web having a top surface and a bottom surface, the web containing polymeric nanofibers of a first polymer having an average fiber diameter between about 50 nm and about 800 nm and pores between said nanofibers, wherein on at least the top surface of said web said polymeric nanofibers are coated with at least a second polymer different from said first polymer, and wherein the thickness of the second polymer coating on the nanofibers of the top surface is greater than the thickness of the second polymer coating on the nanofibers of the bottom surface.

2. The nonwoven web of claim 1, wherein the second polymer coating is absent from the nanofibers on said bottom surface.

3. The nonwoven web of claim 1, wherein the nonwoven web further comprises nanofibers of said second polymer connecting said polymeric nanofibers of said first polymer.

4. The nonwoven web of claim 3, wherein said nanofibers of said second polymer bridge over pores between said nanofibers of said first polymer.

5. The nonwoven web of claim 1, wherein the thickness of the second polymer coating on the polymeric nanofibers is between about 15 nm and about 2 µm.

6. The nonwoven web of claim 1, wherein the second polymer coating thickness is a gradient throughout the thickness of the web.

7. The nonwoven web of claim 3, wherein the second polymer coating thickness is a gradient throughout the thickness of the web.

8. The nonwoven web of claim 2, wherein the polymeric nanofibers within about 2 µm of the bottom surface are coated with the second polymer.

9. The nonwoven web of claim 1, wherein the polymeric nanofibers on the bottom surface and a portion of the thickness of the web adjacent the bottom surface are coated with the second polymer.

10. The nonwoven web of claim 9, wherein the second polymer coating on the bottom surface of said web produces a gradient thickness throughout the thickness of said web which overlaps the second polymer coating gradient from said top surface.

11. The nonwoven web of claim 1, wherein the second polymer is liquid repellent.

12. The nonwoven web of claim 11, wherein the web has a hydrostatic head of at least about 300 cm.

13. The nonwoven web of claim 11, wherein the coated top surface exhibits a static water contact angle of at least about 135°.

14. The nonwoven web of claim 1, wherein said first polymer fibers are free of fluorinated components.

15. The nonwoven web of claim 1, wherein said second polymer is hydrophilic and the coated web surface has a water wetting time at least 25% lower than an equivalent uncoated web.

16. The nonwoven web of claim 1, further comprising a coating of a third polymer, different from said first and second polymers.

17. The nonwoven web of claim 16, wherein the nanofibers on said bottom surface are coated with said third polymer.

18. The nonwoven web of claim 1, wherein the average pore size of the nonwoven web is reduced by said second polymer coating.

19. The nonwoven web of claim 4, wherein the average pore size of the nonwoven web is reduced by said bridging second polymer nanofibers.

20. The nonwoven web of claim 1, further comprising a supporting scrim of a woven fabric; a nonwoven fabric selected from the group consisting of meltblown webs, spunbond webs, flash spun webs, staple-based carded or air-laid webs, wet laid webs, resin-bonded webs, needle-punched webs and spunlaced webs; a porous film; a knit fabric; an apertured film; paper; and combinations thereof.

21. A nonwoven web having a top surface and a bottom surface, the web containing polymeric fibers of a first polymer and pores between said fibers, said fibers coated with at least a second polymer different from said first polymer, and wherein the second polymer coating thickness is a gradient throughout the thickness of the web.

22. The nonwoven web of claim 21, wherein the second polymer coating is absent from the fibers on said bottom surface.

23. The nonwoven web of claim 21, wherein the nonwoven web further comprises nanofibers of said second polymer connecting said fibers of said first polymer.

24. The nonwoven web of claim 23, wherein said nanofibers of said second polymer bridge over pores between said fibers of said first polymer.

25. The nonwoven web of claim 21, wherein said polymeric fibers of said first polymer are selected from the group of spunbond fibers, meltblown fibers, flash spun fibers, electrospun fibers, electroblown fibers, staple fibers and combinations thereof.

26. The nonwoven web of claim 25, further comprising a supporting scrim of a woven fabric; a nonwoven fabric selected from the group consisting of meltblown webs, spunbond webs, flash spun webs, staple-based carded or air-laid webs, wet laid webs, resin-bonded webs, needle-punched webs and spunlaced webs; a porous film; a knit fabric; an apertured film; paper; and combinations thereof.

27. The nonwoven web of claim 21, wherein said first polymer fibers are free of fluorinated components.

28. The nonwoven web of claim 21, wherein said second polymer is hydrophilic and the coated web surface has a water wetting time at least 25% lower than an equivalent uncoated web.

## Patentansprüche

1. Vliesnetz, das eine obere Fläche und eine untere Fläche aufweist, wobei das Netz polymere Nanofasern aus einem ersten Polymer enthält, die einen durchschnittlichen Faserdurchmesser zwischen etwa 50 nm und etwa 800 nm und Poren zwischen den Nanofasern aufweisen, wobei auf mindestens der oberen Fläche des Netzes die polymeren Nanofasern mit mindestens einem zweiten Polymer, das von dem ersten Polymer verschieden ist, beschichtet sind und wobei die Dicke der zweiten Polymerbeschichtung auf den Nanofasern der oberen Fläche stärker ist als die Dicke der zweiten Polymerbeschichtung auf den Nanofasern der unteren Fläche.

2. Vliesnetz nach Anspruch 1, wobei die zweite Polymerbeschichtung auf den Nanofasern auf der unteren Fläche fehlt.

3. Vliesnetz nach Anspruch 1, wobei das Vliesnetz des Weiteren Nanofasern aus dem zweiten Polymer umfasst, die die polymeren Nanofasern des ersten Polymers verbinden.

4. Vliesnetz nach Anspruch 3, wobei die Nanofasern aus dem zweiten Polymer Poren zwischen den Nanofasern aus dem ersten Polymer überbrücken.

5. Vliesnetz nach Anspruch 1, wobei die Dicke der zweiten Polymerbeschichtung auf den polymeren Nanofasern zwischen etwa 15 nm und etwa 2 µm liegt.

6. Vliesnetz nach Anspruch 1, wobei die zweite Polymerbeschichtungsdicke ein Gradient durch die Dicke des Vliesnetzes ist.

7. Vliesnetz nach Anspruch 3, wobei die zweiten Polymerbeschichtungsdicke ein Gradient durch die Dicke des Vliesnetzes ist.

8. Vliesnetz nach Anspruch 2, wobei die polymeren Nanofasern innerhalb von etwa 2 µm der unten Fläche mit dem zweiten Polymer beschichtet sind.

9. Vliesnetz nach Anspruch 1, wobei die polymeren Nanofasern auf der unteren Fläche und ein Teil der Dicke des Netzes an der unteren Fläche anliegend mit dem zweiten Polymer beschichtet sind.

10. Vliesnetz nach Anspruch 9, wobei die zweite Polymerbeschichtung auf der unteren Fläche des Netzes eine Gradientendicke durch die Dicke des Netzes bildet, die den zweiten Polymerbeschichtungsgradienten von der oberen Fläche überlappt.

11. Vliesnetz nach Anspruch 1, wobei das zweite Polymer flüssigkeitsabweisend ist.

12. Vliesnetz nach Anspruch 11, wobei das Netz einen hydrostatischen Druck von mindestens etwa 300 cm aufweist.

13. Vliesnetz nach Anspruch 11, wobei die beschichtete obere Fläche einen statischen Wasserkontaktwinkel von mindestens etwa 135° aufweist.

14. Vliesnetz nach Anspruch 1, wobei die ersten Polymerfasern von fluorierten Komponenten frei sind.

15. Vliesnetz nach Anspruch 1, wobei das zweite Polymer hydrophil ist und die beschichtete Netzfläche eine Wasserbenetzungszeit aufweist, die mindestens 25 % geringer ist als diejenige eines äquivalenten unbeschichteten Netzes.

16. Vliesnetz nach Anspruch 1, des Weiteren eine Beschichtung aus einem dritten Polymer umfassend, das von den ersten und zweiten Polymeren verschieden ist.

17. Vliesnetz nach Anspruch 16, wobei die Nanofasern auf der unteren Fläche mit dem dritten Polymer beschichtet sind.

18. Vliesnetz nach Anspruch 1, wobei die durchschnittliche Porengröße des Vliesnetzes durch die zweite Polymerbeschichtung reduziert ist.

19. Vliesnetz nach Anspruch 4, wobei die durchschnittliche Porengröße des Vliesnetzes durch die überbrückenden zweiten Polymernanofasern reduziert ist.

20. Vliesnetz nach Anspruch 1, des Weiteren ein Trägergewebe aus einem gewobenen Stoff; einen Vliesstoff ausgewählt aus der Gruppe bestehend aus schmelzgeblasenen Netzen, Spinnvliesmatten, flashgesponnenen Netzen, Krempel- oder Blasvliesen auf Stapelfaserbasis, Nassvliesstoffen, harzgebundenen Vliesen, Nadelvliesen und Spunlaced-Vliesstoffen; einen porösen Film; ein Gestrick; einen mit Öffnungen versehenen Film; Papier; und Kombinationen davon umfassend.

21. Vliesnetz, das eine obere Fläche und eine untere Fläche aufweist, wobei das Netz polymere Nanofasern aus einem ersten Polymer und Poren zwischen den Fasern enthält, wobei Fasern, die mit mindestens einem zweiten Polymer, das von dem ersten Polymer verschieden ist, beschichtet sind, und wobei die Dicke der zweiten Polymerbeschichtung ein Gradient durch die Dicke des Netzes hindurch ist.

22. Vliesnetz nach Anspruch 21, wobei die zweite Polymerbeschichtung auf den Fasern auf der unteren Fläche fehlt.

23. Vliesnetz nach Anspruch 21, wobei das Vliesnetz des Weiteren Nanofasern aus dem zweiten Polymer umfasst, die die Fasern aus dem ersten Polymer verbinden.

24. Vliesnetz nach Anspruch 23, wobei die Nanofasern aus dem zweiten Polymer Poren zwischen den Fasern aus dem ersten Polymer überbrücken.

25. Vliesnetz nach Anspruch 21, wobei die polymeren Fasern aus dem ersten Polymer aus der Gruppe ausgewählt sind bestehend aus spunbonded Fasern, schmelzgeblasenen Fasern, flash-gesponnenen Fasern, elektrogesponnenen Fasern, Elektroblasfasern, Stapelfasern und Kombinationen davon.

26. Vliesnetz nach Anspruch 25, des Weiteren ein Trägergewebe aus einem gewobenen Stoff; einen Vliesstoff ausgewählt aus der Gruppe bestehend aus schmelzgeblasenen Netzen, Spinnvliesmatten, flashgesponnenen Netzen, Krempel- oder Blasvliesen auf Stapelfaserbasis, Nassvliesstoffen, harzgebundenen Vliesen, Nadelvliesen und Spunlaced-Vliesstoffen; einen porösen Film; ein Gestrick; einen mit Öffnungen versehenen Film; Papier; und Kombinationen davon umfassend.

27. Vliesnetz nach Anspruch 21, wobei die ersten Polymerfasern von fluorierten Komponenten frei sind.

28. Vliesnetz nach Anspruch 21, wobei das zweite Polymer hydrophil ist und die beschichtete Netzfläche eine Wasserbenetzungszeit aufweist, die mindestens 25 % geringer ist als diejenige eines äquivalenten unbeschichteten Netzes.

## Revendications

1. Voile non-tissé ayant une surface de dessus et une surface de dessous, le voile contenant des nanofibres polymères d'un premier polymère ayant un diamètre moyen de fibre compris entre environ 50 nm et environ 800 nm et des pores entre lesdites nanofibres, sur au moins la surface de dessus dudit voile lesdites nanofibres polymères étant enduites d'au moins un second polymère différent dudit premier polymère, et l'épaisseur du second polymère enduisant les nanofibres de la surface de dessus étant plus grande que l'épaisseur du second polymère enduisant les nanofibres de la surface de dessous.

2. Voile non-tissé selon la revendication 1, le second enduit polymère étant absent des nanofibres sur ladite surface de dessous.

3. Voile non-tissé selon la revendication 1, le voile non-tissé comprenant en outre des nanofibres dudit second polymère reliant lesdites nanofibres polymères dudit premier polymère.

4. Voile non-tissé selon la revendication 3, lesdites nanofibres dudit second polymère établissant des ponts par dessus les pores entre lesdites nanofibres dudit premier polymère.

5. Voile non-tissé selon la revendication 1, l'épaisseur du second enduit polymère sur les nanofibres polymères étant comprise entre environ 15 nm et environ 2 µm.

6. Voile non-tissé selon la revendication 1, l'épaisseur du second enduit polymère étant un gradient à travers l'épaisseur du voile.

7. Voile non-tissé selon la revendication 3, l'épaisseur du second enduit polymère étant un gradient à travers l'épaisseur du voile.

8. Voile non-tissé selon la revendication 2, les nanofibres polymères sur environ 2 µm de la surface de dessous étant enduites du second polymère.

9. Voile non-tissé selon la revendication 1, les nanofibres polymères sur la surface de dessous et une partie de l'épaisseur du voile adjacente à la surface de dessous étant enduites du second polymère.

10. Voile non-tissé selon la revendication 9, l'enduit de second polymère sur la surface de dessous dudit voile produisant une épaisseur en gradient à travers l'épaisseur dudit voile qui chevauche le gradient de l'enduit de second polymère à partir de ladite surface de dessus.

11. Voile non-tissé selon la revendication 1, le second polymère étant un répulsif des liquides.

12. Voile non-tissé selon la revendication 11, le voile ayant une tête hydrostatique d'au moins environ 300 cm.

13. Voile non-tissé selon la revendication 11, la surface enduite de dessus faisant preuve d'un angle de contact statique avec l'eau d'au moins environ 135°.

14. Voile non-tissé selon la revendication 1, lesdites fibres de premier polymère étant exemptes de composants fluorés.

15. Voile non-tissé selon la revendication 1, ledit second polymère étant hydrophile et la surface du voile enduit ayant un temps de mouillage par l'eau au moins 25 % inférieur à celui d'un voile non enduit équivalent.

16. Voile non-tissé selon la revendication 1, comprenant en outre un enduit d'un troisième polymère, différent desdits premier et second polymères.

17. Voile non-tissé selon la revendication 16, les nanofibres de ladite surface de dessous étant enduites dudit troisième polymère.

18. Voile non-tissé selon la revendication 1, la taille moyenne de pore du voile non-tissé étant réduite par ledit enduit de second polymère.

19. Voile non-tissé selon la revendication 4, la taille moyenne de pore du voile non-tissé étant réduite par ledit établissement de ponts des nanofibres de second polymère.

20. Voile non-tissé selon la revendication 1, comprenant en outre un renfort tissé de support en textile tissé; un textile non-tissé choisi parmi le groupe constitué des voiles de fusion soufflage, des voiles filés-liés, des voiles à filage éclair, des voiles de fibres discontinues cardées ou des voiles formés par voie pneumatique, des voiles formés par voie humide, des voiles liés avec une résine, des voiles aiguilletés et des voiles lacés par filage; un film poreux; un textile tricoté; un film perforé; du papier; et des combinaisons de ceux-ci.

21. Voile non-tissé ayant une surface de dessus et une surface de dessous, le voile contenant des fibres polymères d'un premier polymère et des pores entre lesdites fibres, lesdites fibres étant enduites d'au moins un second polymère différent dudit premier polymère, et l'épaisseur de l'enduit de second polymère étant un gradient à travers l'épaisseur du voile.

22. Voile non-tissé selon la revendication 21, l'enduit de second polymère étant absent des fibres de ladite surface de dessous.

23. Voile non-tissé selon la revendication 21, le voile non-tissé comprenant en outre des nanofibres dudit second polymère reliant lesdites fibres dudit premier polymère.

24. Voile non-tissé selon la revendication 23, lesdites nanofibres dudit second polymère établissant des ponts par dessus les pores entre lesdites fibres dudit premier polymère.

25. Voile non-tissé selon la revendication 21, lesdites fibres polymères dudit premier polymère étant choisies parmi le groupe des fibres filés-liés, des fibres de fusion soufflage, des fibres de filage éclair, des fibres électrofilées, des fibres électrosoufflées, des fibres discontinues et de leurs combinaisons.

26. Voile non-tissé selon la revendication 25, comprenant en outre un renfort tissé de support en textile tissé; un textile non-tissé choisi parmi le groupe constitué des voiles de fusion soufflage, des voiles filés-liés, des voiles à filage éclair, des voiles de fibres discontinues cardées ou des voiles formés par voie pneumatique, des voiles formés par voie humide, des voiles liés avec une résine, des voiles aiguilletés et des voiles lacés par filage; un film poreux; un textile tricoté; un film perforé; du papier; et des combinaisons de ceux-ci.

27. Voile non-tissé selon la revendication 21, lesdites fibres de premier polymère étant exemptes de composants fluorés.

28. Voile non-tissé selon la revendication 21, ledit second polymère étant hydrophile et la surface du voile enduit ayant un temps de mouillage par l'eau au moins 25 % inférieur à celui d'un voile non enduit équivalent.
